# EUROPEAN PATENT SPECIFICATION

(11) **EP 2 936 881 B1**
(45) Date of publication and mention of the grant of the patent: **04.12.2019**
(21) Application number: 13849983.5
(22) Date of filing: 16.12.2013
(51) Int. Cl.: H04W 48/08, H04W 12/06, H04W 12/08

(54) **CONNECTING TO A WIRELESS NETWORK USING SOCIAL NETWORK IDENTIFIER**
VERBINDEN AN EIN DRAHTLOSES NETZWERK UNTER VERWENDUNG VON KENNUNGEN AUS EINEM SOZIALEN NETZWERK
CONNEXION À UN RÉSEAU SANS FIL À L'AIDE D'IDENTIFIANTS DE RÉSEAU SOCIAL

(30) Priority: 21.12.2012 US 201261745283 P
(43) Date of publication of application: 28.10.2015
(73) Proprietor: Orange, 75015 Paris (FR)
(72) Inventor: BOUCHER, Timothee, San Francisco, CA 94105 (US)
(74) Representative: Regimbeau
(86) International application number: PCT/IB2013/003004
(87) International publication number: WO 2014/096954

(56) References cited:
- EP-A1- 2 725 761
- WO-A1-2013/112652
- US-A1- 2012 192 258
- Aldo Cassola ET AL: "SNEAP: A Social Network-Enabled EAP Method No More Open Hotspots", Proceedings of NSDI Demo, 30 March 2011 (2011-03-30), XP55044554, Boston Retrieved from the Internet: URL:http://www.ccs.neu.edu/home/taojin/pub /sneap_nsdi11.pdf [retrieved on 2012-11-16]
- Kok-Kiong Yap ET AL: "Separating Authentication, Access and Accounting: A Case Study with OpenWiFi", OPENFLOW-TR-2011-1, 15 September 2011 (2011-09-15), pages 1-7, XP55051802, Retrieved from the Internet: URL:https://www.opennetworking.org/images/ stories/downloads/sdn-resources/technical- reports/openflow-tr-2011-1-openwifi.pdf [retrieved on 2013-01-30]

## Description

### FIELD OF THE PRESENT SYSTEM:

The present disclosure generally relates to telecommunication devices in telecommunication networks, and more specifically to wireless enabled devices.

### BACKGROUND OF THE PRESENT SYSTEM:

Telecommunication devices, such as mobile phones, have become important devices in our daily life. Such electronic devices can now provide data connections on top of voice and text services. These connections may be enabled either through 3G or now 4G radio telecommunication networks or wireless network such as WiFi or WLAN networks.

A mobile device will automatically connect through a 3G or 4G data connection provided its owner has subscribed to a data plan with his carrier. A wireless connection requires most of the time that a user activates a connection procedure.

Indeed, with a mobile device like a smartphone, it can be troublesome to connect to a specific wireless network unless it is handled automatically by your carrier (hotspot, etc.). The user might have to open the wireless connection menu of the mobile device, scan for available networks. He will then have to figure out which one he wants to connect to (which can be a problem as, in some places, there are dozens of networks available). Alternatively he might have to enter the SSID (service set identifier) with the use of the phone keyboard and then eventually enter the password associated to the WiFi network. The password may require the user to enter multiple characters using an impoverished keyboard (as generally available with mobile devices), increasing the risk of errors.

All these steps can be tedious and confusing to any user. Whether trying to connect to a hotspot or to the residential gateway of a friend he is visiting, the user will have to follow a connection process using connection parameters unknown to him. The problem is especially noticeable when using a hot spot offered in a coffee place or shop. These places, if offering free wireless connection, still require the user to enter authentication data like an access code through a redirection page. The access code is generally available through posting in the store or on a purchase receipt.

Existing solutions require the knowledge of the connection parameters from a third party as these parameters are shared through messages. In published patent application WO 2010/038114, connection parameters are shared among mobile devices through SMS. Such a solution transposed to a store would require SMS capabilities from the store IT infrastructure, which is not always possible in smaller stores. Furthermore, the user, after receiving the SMS, will still have to cut and paste the connection parameters in order to provide them to the connection manager of his device.

Document Aldo Cassola ET AL: "SNEAP: A Social Network-Enabled EAP Method No More Open Hotspots", Proceedings of NSDI Demo, shows a social network enabled EAP method (SNEAP) allowing user authentication at a wireless hotspot, using the social NW credentials. When accessing the AP the first time (web browser) the user is redirected to social NW page for authentication. The credentials together with the credentials of the AP owner are checked with respect to friendship relation for subsequently granting access to the Internet via said hotspot.

Today new access points, especially home and residential gateways, have capabilities to access the internet. It would be interesting to benefit from these additional functionalities to enable an easy connect service either when a user is visiting a friend or a store.

There is a further need for a solution that can be easily implemented in stores, restaurants and coffees places with limited investments or even when visiting a friend.

### SUMMARY OF THE PRESENT SYSTEM AND METHOD:

The present invention defines a method performed by an access point for connecting an electronic device of a guest user according to independent claim 1, an access point according to independent claim 7, a telecommunication system according to independent claim 8 and a computer readable medium according to independent claim 9.

Preferred embodiments are defined by the dependent claims.

Thanks to the present invention, the connection is conditioned to the two identifiers being part of social graph, i.e. that a link exists in the social network. When the access point is a residential gateway, the second identifier may correspond to the owner's identifier on a social network. Any visiting friend will be given access to this residential gateway using his own identifier to the same social network and the existing link between their respective identifiers. As social networks can present various forms, the "social" link may be "friends" on social networks like Facebook™, Google+™ or Linkedln™, or a follower on a social network like Twitter™. When the access point is a WIFI hot spot provided by a store or business, the second identifier may correspond to the business page on the social network, the link being an "I like" or "+1" that allows the user of the first identifier to follow the business page.

### BRIEF DESCRIPTION OF THE DRAWINGS:

The present system, call management node and method are explained in further detail, and by way of example, with reference to the accompanying drawings wherein:
FIG. 1 shows an illustrative embodiment of an electronic device in the present system;
FIG. 2A illustrates a first exemplary embodiment of the present system,
FIG. 2B illustrates a second exemplary embodiment of the present system,
FIG. 3 is a flow chart illustrating an embodiment of the present method,
FIG. 4A is a flow chart illustrating a second embodiment of the present method, and;
FIG. 4B is a flow chart illustrating a third embodiment of the present method.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, gateways or other entities in a telecommunication network are not detailed as their implementation is beyond the scope of the present system and method.

For purposes of simplifying a description of the present system, the terms "operatively coupled", "coupled", and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication between a wireless hot spot of a telecommunication network and one or more user or electronic devices.

Unless specified otherwise, the exemplary embodiment here after will be described in its application to a mobile device that can connect to a wireless network through an access point. The present exemplary embodiment is in no way a limitation of the scope of the present method and system as other telecommunications devices such tablets, desktop or laptop computers, or any other electronic device with wireless capacities may be used by the man skilled in the art.

In addition, it should be expressly understood that the drawings are included for illustrative purposes and do not represent the scope of the present system.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a display device so that it may be seen and interacted with by a user. The term rendering may also comprise all the actions required to generate a GUI prior to the display, like e.g. a map representation generated on a server side for a browser application on a user device.

A GUI is a type of user interface which allows a user to interact with electronic devices such as computers, hand-held devices such as smartphones or tablets, household appliances, office equipment and the likes.

In the description here after, an application program (AP) - or software - may be seen as any tool that functions and is operated by means of a computer, with the purpose of performing one or more functions or tasks for a user or another application program. To interact with and control an AP, a GUI of the AP may be displayed on the user device display.

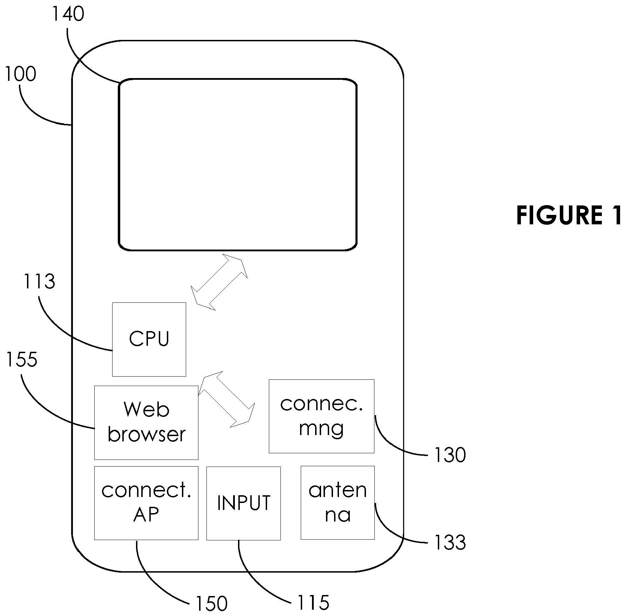

FIG. 1 is an illustration of an exemplary user device 100 used in the present system. In the here after description, the user or electronic device is illustrated as a mobile device 100. The mobile device 100 comprises a display device 140, a processor 113, a connection manager 130, an antenna 133 and an input device 115.

In the present system, the user interaction with and manipulation of the application program rendered on a GUI may be achieved using the display device 140, or screen, which is presently a touch panel operationally coupled to the processor 113 controlling the displayed interface. The input device 115 and display device 140 appear as identical to the user. Some mobile devices 100 today may also present an input device 115 like a keyboard.

Processor 113 may control the rendering and/or the display of the GUI on the display device 140 depending on the type of application program, i.e. resident or web-based. Processor 113 may also handle the user entries according to the present method. The user entries to interact with an application program such as a web browser may be provided through interactions with the touch panel 140.

The touch panel 140 can be seen as an input device allowing interactions with a finger of a user or other devices such as a stylus. Touch sensor interface or touch panel 140 may include any suitable circuitry to convert analog signals corresponding to touch input received over its surface into any suitable digital touch input data. Such touch input data can, for example, be used to make selections of portions of the GUI of an AP. The input received from a user's touch is sent to the processor 113. The touch panel 140 is configured to detect and report the (location of the) touches to the processor 113, which can interpret the touches in accordance with the application program and the currently displayed GUI. For example, the processor 113 can initiate a task, e.g. a control of a browser AP 155 or an optional wireless connection (referred to here after as an easy connect AP) AP 150 according to the present system.

The touch panel 140 can be based on sensing technologies including but not limited to capacitive sensing, resistive sensing, surface acoustic wave sensing, pressure sensing, optical sensing, and/or the likes.

In the present system, a number of different applications may be provided with the mobile device 100, like an wireless connection application 150, a web browser 155 and a connection manager 130. Hardware devices like an antenna 133 and a camera are also provided and managed by processor 113.

The connection manager 130 is provided to search for wireless networks in the vicinity of the mobile device 100 using the antenna 133. Connection manager is also used to handle the connection procedure with any of the found network once they are selected by the user or automatically.

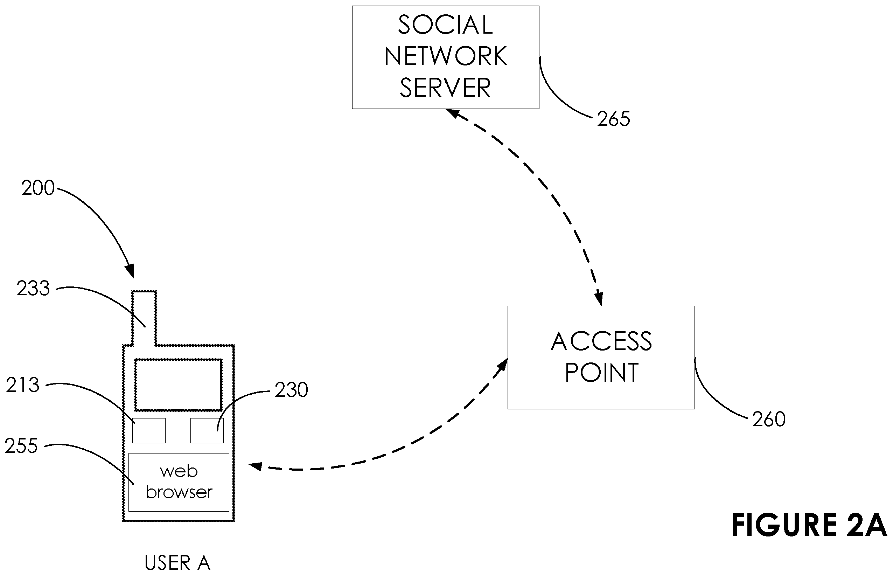

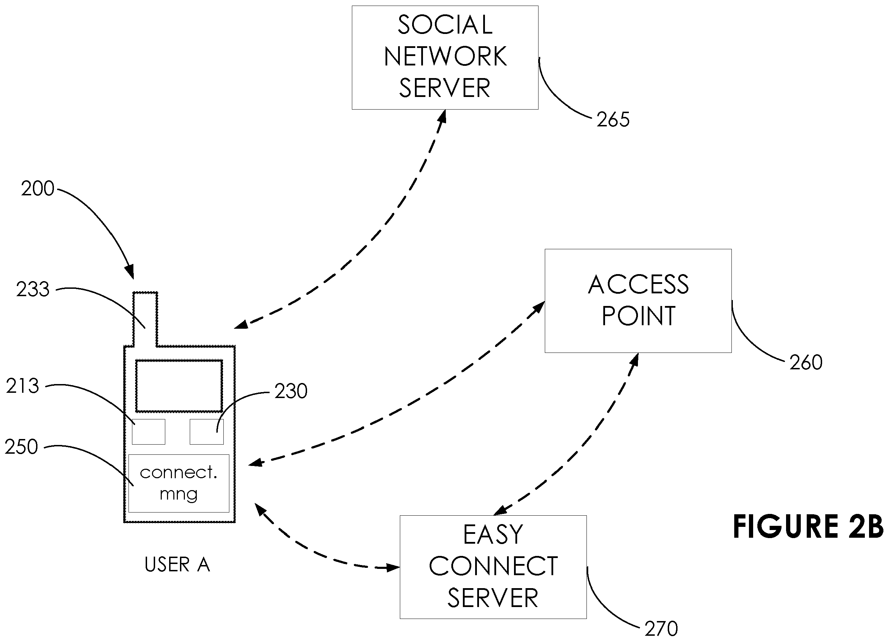

Different types of WIFI networks exist today:
- open or encryption free wireless network, allowing access without provision of a key like a WPA or WEP key with the selection of the SSID of the wireless network. Some seemingly free wireless networks nevertheless require provision of connection parameters like some authentication data when using a captive portal, i.e. the redirection to a special webpage before accessing the internet freely. Such a case will be discussed in conjunction with FIG. 2A,
- encrypted wireless network that requires the provision of a secured key like a WEP or WPA key. Such WIFI network will be discussed with regards to FIG. 2B.

FIG. 2A is an illustration of a first exemplary embodiment of the present system. The mobile device 200 is in the presence of a wireless network enabled by access point or router 260. The mobile device 200 is equipped, like the mobile device 100 of FIG. 1, with an antenna 233, a processor 213, a web browser 250 and a connection manager 230.

The wireless network provided by router 260 is characterized by a network name or SSID NETWORK_ID and is an open network. Such an access point uses a captive portal technology. In other words the access point 260 will accept any new device connecting to the SSID NETWORK_ID, but will block any port to connect the electronic device 200 to the internet as long as the device 200 has not processed an authentication page pushed to the web browser 255 of electronic device 200.

Access point or router 260 has the possibility itself to access the internet, i.e. is can access over the internet different websites and services such as the social network 265 as illustrated here after.

When the user of electronic device 200, referred to here after as a guest user to the wireless network, tries to connect to the internet using his web browser 255, the browser will first display the redirection page. Such pages in existing solutions generally requires either the provision of authentication data (like with hotspot such as Boingo™, or with hotel wireless networks) or simply requires the user to accept terms and conditions of use of the page.

In the present system, the guest user will provide his identifier to a social network hosted by server 265. A social network may be described as a social structure made up of a set of users (such as individuals or organizations) and the dyadic ties - i.e. links - between these users. Its technical implementation corresponds to a graph structure defining relationships or links between a plurality of nodes, each node corresponding to an identifier for the user in the social network. The guest user identifier in the server 265 hosting the social network will be referred here after to the first identifier.

In the present system, the user or entity owning the access point is also a member of the social network 265 and is associated to a second identifier in the server 265 hosting the social network.

In the here after description the server 265 hosting the social network and the social network itself will be referred to as the social network 265 for simplification purposes. Similarly a user and his identifier in the social network will also refer indifferently to a specific node in the graph structure representing the social network. In a social network, the social graph of a first user can be seen as the plurality of other users/nodes linked directly or indirectly with this first user. Links are often defined by friendship as in social networks like Facebook™ or Google+™. The direct friends correspond to a first hop between the first user and other users. Friends of friends are separated from the first user by 2 degrees of separations.

More generally, a degree of separation between any two nodes, i.e. any two users, in the graph structure is a minimum number of hops required to transverse the graph structure from one node to the other.

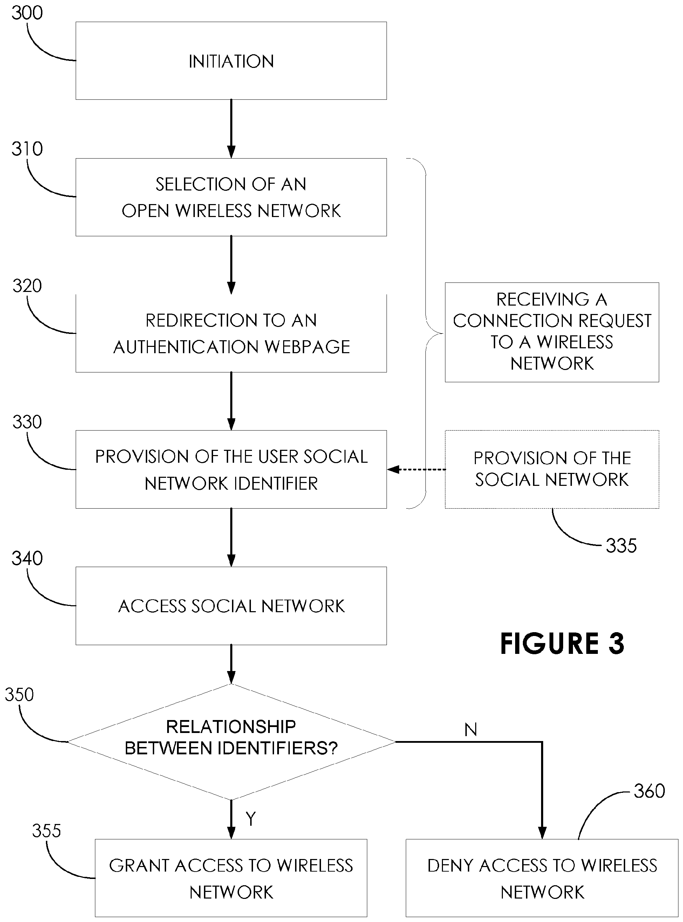

FIG. 3 is an exemplary flowchart according to another embodiment of the present method. This flowchart corresponds to the exemplary system of FIG. 2A. In this exemplary embodiment, the present method is carried out by the access point 260.

In an initiation or configuration act 300, an identifier (referred to here after as the second identifier) in the social network 265 is associated with the access point 260. This identifier may corresponds to the social network identifier of the access point owner when it is a residential or home gateway providing the wireless network. The identifier may correspond also to a business identifier, when the access point 260 is a gateway provided in a store or a business like a cafe, a supermarket or a mall for instance. Such businesses may also be members, i.e. users of a social network 265 through a dedicated page other users can "like" or follow. A hot spot may also be associated to a member of the social network 265 and have its own page that the guest user can like, follow, "+1", associate himself to.

The access point 260 broadcast an SSID network name NETWORK_ID as an open wireless network. The user of mobile device 200 may open his connection manager 230 and browse for available networks. In a further act 310, the user will select among available wireless networks the open network NETWORK_ID.

In the present system of FIG. 2A, the access point 260 will implement a captive portal to redirect the mobile device 200 to an authentication webpage (act 320). Different techniques are available for such a redirection. For instance, once the user has connected his device to the network NETWORK_ID, the access point may block any data packet until the user opens his web browser 255. At that moment, the access point 260 will send (over the connection established with the mobile device) to the browser a webpage that may require authentication and/or payment, or simply request agreement of the user to usage policies.

If running the iOS (iPhone™ Operating System) or OSX (Mac™ computer Operating System), the electronic device 200 will ping a predefined webpage (for instance www.apple.com) and will consider that it is dealing with a captive portal if no response is received. It will then display the redirection page in a special web browser, before the user gets a chance to open his own web browser 255.

In the present system, the redirection webpage comprises a request for the social network identifier, i.e. the first identifier, of the guest user, identifier provided in a subsequent act 330. In an additional embodiment of the present method, the provision of the user social network identifier comprises the provision of the social network authentication data for the first identifier. This may comprise for instance his identifier (like an email address) and a password. The social network authentication data may bring additional security by allowing the access point 260 to verify that the first user is actually the person associated to the first identifier.

Acts 310 to 330 correspond, for the access point 260, as receiving from the electronic device 200 a connection request to the wireless network NETWORK_ID. In the present system, that connection request comprises the first identifier provided in act 330. The user experience for the user of the electronic device 200 may correspond to what he actually experiences when connecting to some web services that offer a connection using his social network authentication data (a GUI showing "connect with your Facebook account", "connect with Twitter", "connect with Linkedln" ...).

In a subsequent act of the present method, the access point 260 will determine using the server 265 hosting the social network if a portion of the graph structure (defining relationships between the plurality of nodes) defines a relationship between the nodes corresponding respectively to the first and second identifiers. The portion of the graph structure can be seen as the social graph of one or the other user, i.e. identifier.

In order to do so, in a further act 340, the access point 260 will access the server 265 hosting the social network (using e.g. its own access to the internet), using the first and/or second identifier. This access is used to retrieve through the social network 265 if a social link exists between the first and second identifiers. In other words, the access point 260 will search if one of the first or second identifier is part of the social graph of the other identifier.

Depending on how the social network is built, different ways may be readily available to the access point 260 to verify the existence of that social link. The access point may for instance uses APIs (application programming interface) to request the social graph of either the first or second identifier to the social network 265. The access point may request the social graph of one of the identifiers and verify locally if the other identifier is part of the returned social graph (received from the social network 265). When the authentication data for the first identifier are provided in the redirection webpage, the access point may use this authentication data to connect to the social network 265 and access directly the social graph of the first identifier. It will then proceed with searching for the second identifier in that social graph.

Alternatively, an API may be provided by the social network 265 to query if two identifiers, provided as parameters to the API, are part of a same social graph, or to query what the degree of separation is between the two identifiers.

The portion of the graph structure, i.e. the social graph, may be defined differently from one social network to the other. For instance, using Facebook™ or Google+™, a social link may exist between friends, or friends of friends. A social link may also exist between a business user and another user, provided the later has liked or "+1" the business user social network page, sometimes also referred to as its wall.

In a further act 350, the access point 260 will determine if a social link exists between the first and second identifiers. The verification may be direct if an API allows to query the social network 265 directly for such a link, as mentioned before. In the present method, the (full) access to the wireless network, so as to access the internet or a local network, will be granted upon that determination.

Provided there is a social link (answer Yes to act 350) between the first and second identifiers, i.e. or portion of the graph structure defining a relationship between them, the access point 260 will grant access to the wireless network in a further act 355. In other words, it will no longer block any ports to the internet for the mobile device 200 of the guest user. This may be managed through the MAC (Media Access Control) address of the electronic device, or through its IP address in the local network. Provided there is no social link (answer No to act 350), the access point will deny the mobile device 200 access to the wireless network in a further act 360.

The determination of a social link may rely upon criteria defined by the owner of the access point 260 during the configuration of the access point 260, in act 300. During this initiation, the owner of the access point will connect to a configuration page for enabling the present method and configure what a social link needs to be to allow access to a guest user. To do so, he will defines rules that the guess must clear to be given access. The types of rules will be dependent on how each social network is built. For example, for Facebook™, it could be "guest must be a friend of mine", or "guest must be a friend of a friend", "guest must Like our Facebook™ page, "guest must Like the TV show page The Office". For Twitter™, it could be "guest follows me on Twitter", "I follow the guest on Twitter", "guest follows one or more of these Twitter users". These rules could be combined with boolean logic, e.g. ("I follow guest OR guest follows me AND guest follows @jack) or (guest has over 10000 followers").

As seen from the various rules that can be defined through the configuration of the access point, the second identifier associated to the access point 260 may be one or more identifiers (i.e. a least one) of a same social network 265 so as to set complex rules such as boolean rules defining what a social link may be.

Furthermore, when the social link is measured in terms of degrees of separation, the social link may be defined as a preset degree of separation, i.e. for instance one, two or more degrees of separation. In other words, access to the wireless network will be possible if the degree of separation measured between the identifiers is lower than that preset number. For instance if the preset number is one, then users (guest and owner) will have to be are friends (as with Facebook™, Google+™ or Linkedln™), or one following the other (as with Twitter™).

Another way to associate a plurality of identifiers to the access point 260 is to associate one or more identifiers per social network, when a plurality of social networks may be used to allow access to the wireless network. To do so, during the configuration of the access point 260 in act 300, the user may provide one or more identifiers for a plurality of social networks. As a result, the redirection page presented to the guest user in act 320 will also comprise an invite to select one of the available social networks from the plurality, before actually providing the guest user identifier in act 330.

Indeed, the guest user will then be invited to both select a social network among the proposed ones and provide his identifier for the selected social network. As a result, the connection request corresponding to acts 310 to 330 will also comprise the social network the first identifier is associated to (act 335 in dotted lines in FIG. 3). The determining of acts 340 and 350 will comprise a selection of the second identifier corresponding to the social network comprised in the connection request. In other words, the access point 260 will based its search for a social link between the guest user and owner of the access point using the social network selected by the guest user.

The embodiments described in relation to FIGs. 2A and 3 were based on an access point using a captive portal. Alternatively, the present teachings to give access to a wireless network, using the social link between the owner of the access point and the guest user requesting the access to the wireless network, may be transposed to secured wireless networks.

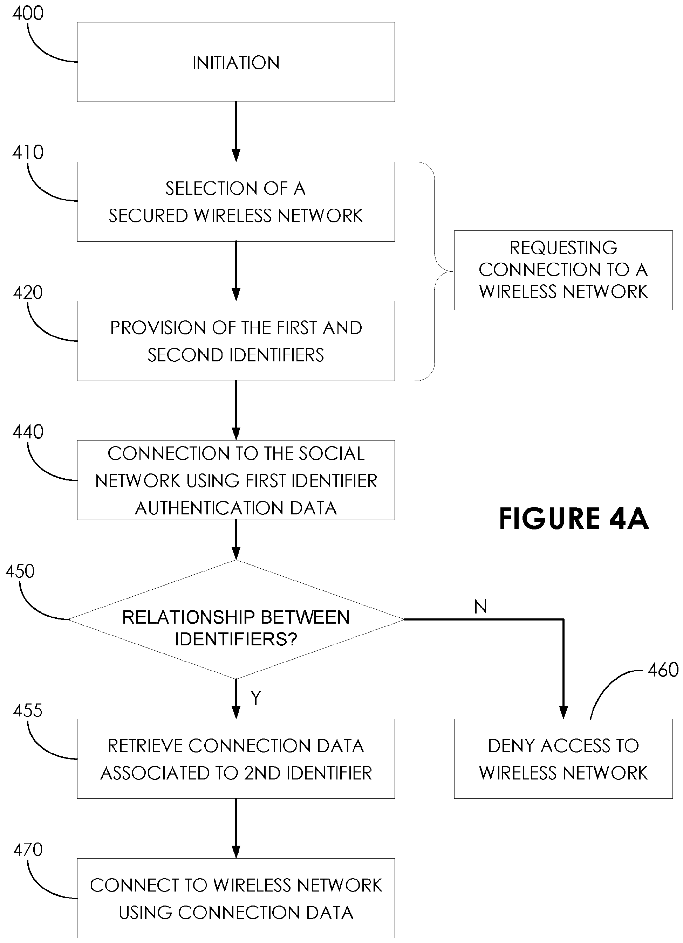

FIG. 2B is an illustration of another exemplary embodiment of the present system. Apart from the elements already described in relation with FIG. 2A, this embodiment further comprise an easy connect server 270 managing a database (not shown) storing a table associating the (second) social network identifier of wireless network owner and his wireless network connection parameters. The network connection parameters may comprise the wireless network SSID NETWORK_ID and its secured key such as a WEP (Wired Equivalent Privacy) or WAP (Wi-Fi Protected Access) key to be provided by the guest user trying to access the wireless network. The easy connect server 270 may also provide an AP 250 (i.e. the easy connect AP 150 of FIG. 1) to be downloaded by the mobile device 200 to enable another exemplary embodiment of the present method, as illustrated in FIG. 4A.

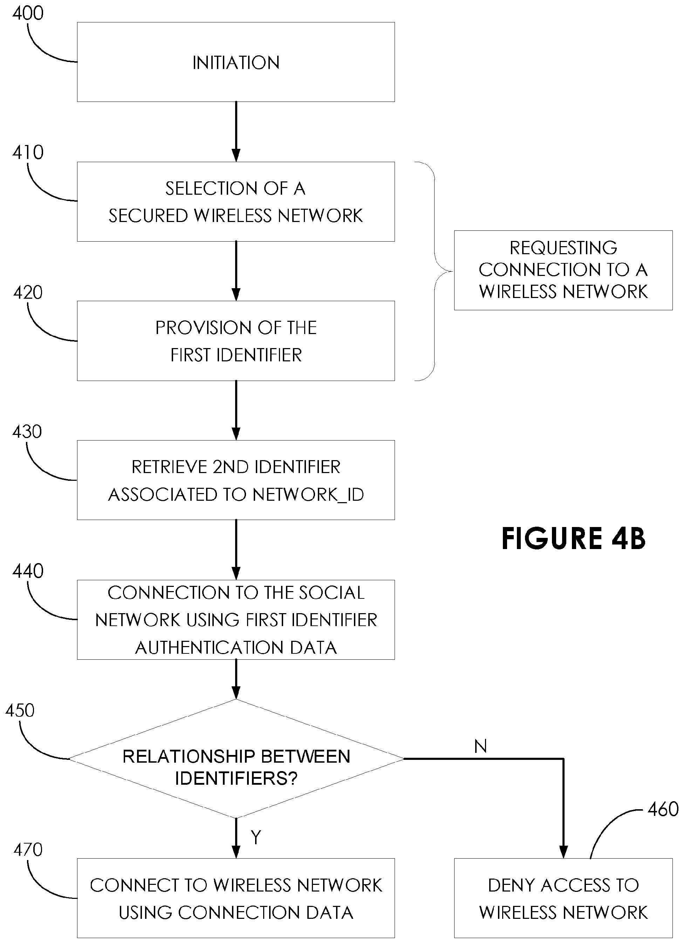

The exemplary embodiment of FIGs. 4A and 4B will now be described in relation to FIG. 2B. In this embodiment, the present method is carried out by the electronic device 200.

In an initiation act 400, the owner of the wireless network will register with the easy connect server 270 his network parameters and his social network identifier, i.e. the second identifier in order to fill in the table mentioned herebefore. The guest user will also download an easy connect AP 250 (as seen in FIG. 2B) or client to enable the present method. The client may be advertised by the owner of the access point who wants to benefit from the easy connect service enabled by the present system. Such an easy connect client 250 is arranged to:
- retrieve from the connection manager 230 the list of available wireless networks, including knowing whether they require a secured key or not, and receive selection of a secured wireless network from the guest user (act 410),
- request the first identifier from the guest user, and his authentication data to the social network 265 (act 420), in place of requesting the connection parameters (secured key), like a known connection manager would request,
- request the second identifier from the guest user (act 420)
- connect to the social network 265 using the guest user authentication data (act 440), this connection may be managed through the 3G or 4G connection of the mobile device 200. Alternatively, it may be channeled through the wireless network provided by the access point 260 by temporarily allowing some packets associated to the easy connect client 250,
- determine if a social link exists between the first and second identifier, as in the first embodiment of the present system, described in relation to FIGs. 2A and 3 (act 450),
- in case of a positive determination (Yes to act 450), retrieve from the easy connect server 270 the network connection parameters, more specifically the connection data like the secured key associated to the second identifier (act 455),
- proceed with connecting the mobile device 200 with the wireless network (act 470) using the retrieved connection data,
- deny access to the wireless network (act 460) provided no social link exists (no to act 450).

All data access in this embodiment may be managed through the device own data radio access (3G or 4G for instance). Alternatively, it may be enabled through the access point, temporarily unblocking its ports when identifying data packets issued by the easy connect client 250.

In this additional embodiment of the present method, the association at the easy connect server 270 allows to retrieve the connection parameters necessary to connect the mobile device 200 to the secured wireless network (provided by the access point 260). As this embodiment of the present method is carried out by the AP on the mobile device, the mobile device needs at some point to know the second identifier associated with the wireless network the guest user is trying to access. In the illustration of FIG. 4A, the provision of the second identifier is part of the connection request of acts 410 and 420. The provision may for instance be carried out with the provision of the social network authentication data of the first identifier.

This present embodiment may be carried out with just the provision of the first identifier of the access point owner, but it may be preferable for security reasons to request an actual connection to the social network 265 by the easy connect AP 250 in act 440. This connection ensures that the guest user is actually who he pretends to be. Provided no social network connection data is required, the AP will instead call APIs to determine the existence of a social link between identifiers.

In an alternative embodiment of the present method, the provision may the second identifier may be avoided by relying upon the easy connect server 270 as illustrated in FIG. 4B. The same reference numbers refer to the same acts. Once the guest user has provided his first identifier (act 420), the AP may connect to the easy server 270 using the network SSID NETWORK_ID captured in act 410 (selection of a secured wireless network using the easy connect client 250). A lookup in the table managed by the easy connect server 270 will allow to retrieve the (second) social network identifier associated with the SSID. The retrieved identifier, i.e. the second identifier for the access point 260, will then be used along the first identifier for the guest user in subsequent acts 440 and 450 to determine whether a social link exists between the first and second identifiers.

The present embodiments were illustrated using a wireless network provided by the access point 260. The present teaching may also be implemented using a non wireless communication network (to the exception of embodiments of FIGs 4A-4B limited to secured wireless networks), i.e. a network accessible through a wired connection like using the Ethernet connector of an electronic device. Such network may also use redirection pages like the ones described before in relation to the exemplary embodiment of FIG. 3.

Finally, the above discussion is intended to be merely illustrative of the present system and should not be construed as limiting the appended claims to any particular embodiment or group of embodiments. Thus, while the present system has been described with reference to exemplary embodiment using a mobile device, it should also be appreciated that numerous modifications and alternative embodiments may be devised by those having ordinary skill in the art without departing from the broader and scope of the present invention as set forth in the claims that follow.

## Claims

1. A method performed by an access point (260) for connecting an electronic device (200) of a guest user to a wireless network provided by the access point (260) both the electronic device and the access point (260) being associated respectively to a first and second identifier in a server (265) hosting a social network, the social network being defined by a graph structure defining relationships between a plurality of nodes, each node corresponding to an identifier in the social network, the method comprising:
- receiving a connection request for connecting to the network, the connection request comprising the first identifier,
- determining, using the server (265) hosting the social network, if a portion of the graph structure defines a relationship between the nodes corresponding respectively to the first and second identifiers, and
- granting access to the network based on the determining, the method being **characterized in that** the access point (260) is associated to a plurality of second identifiers, each second identifier being associated at a respective server to a different social network, the connection request further comprising the first identifier associated to a social network selected, by the guest user, among the social networks available associated to the plurality of second identifiers, the step of determining further comprising:
- selecting the second identifier corresponding to the social network comprised in connection request.

2. The method of claim 1, wherein a degree of separation between any two nodes of the graph structure is a minimum number of hops required to transverse the graph structure from one node to the other, the portion of the graph structure corresponding to the degree of separations between the nodes corresponding to the first and second identifiers.

3. The method of claim 2, wherein the granting further comprises:
- granting access if the degree of separation is lower than a preset number.

4. The method of claim 1, wherein the connection request comprises the social network authentication data for the first identifier, the determining further comprising:
- accessing the server hosting the social network using the authentication data.

5. The method of claim 4, wherein the connection request comprises the second identifier, the method further comprising following a positive access grant:
- retrieving wireless network connection data associated to the second identifier, and
- connecting to the wireless network using the wireless network connection data.

6. The method of claim 4, wherein the connection request further comprises a wireless network identifier, the determining further comprising:
- retrieving the second identifier using the wireless network identifier.

7. An access point (260) for connecting an electronic device (200) of a guest user to a wireless network provided by said access point (260), both the electronic device (265) and access point (260) being associated respectively to a first and second identifier in a server hosting a social network, the social network being defined by a graph structure defining relationships between a plurality of nodes, each node corresponding to an identifier in the social network, the access point comprising a control circuit configured to:
- receive a connection request for connecting to the network, the connection request comprising the first identifier,
- determine using the server (265) hosting the social network if a portion of the graph structure defines a relationship between the nodes corresponding respectively to the first and second identifiers, and
- grant access to the network based on the determining.
the access point (260) being **characterized in that** it is associated to a plurality of second identifiers, each second identifier being associated at a respective server to a different social network, the connection request further comprising the first identifier associated to a social network selected, by the guest user, among the social networks available associated to the plurality of second identifiers, the step of determining further comprising selecting the second identifier corresponding to the social network comprised in connection request.

8. A telecommunication system comprising:
an access point (260) enabling a wireless network, and an electronic device (200) of a guest user to connect to the wireless network, both electronic device (200) and access point (260) being associated respectively to a first and second identifier in a server (265) hosting a social network, the social network being defined by a graph structure defining relationships between a plurality of nodes, each node corresponding to an identifier in the social network, the electronic device comprising a connection manager to detect networks, and connect to a detected network, and a control circuit,
wherein the access point is configured to:
- receive a connection request for connecting to the wireless network, the connection request comprising the first identifier,
- determine using the server (265) hosting the social network if a portion of the graph structure defines a relationship between the nodes corresponding respectively to the first and second identifiers, and
- grant access to the network based on the determining. the telecommunication system being **characterized in that** the access point (260) is associated to a plurality of second identifiers, each second identifier being associated at a respective server to a different social network, the connection request further comprising the first identifier associated to a social network selected, by the guest user, among the social networks available associated to the plurality of second identifiers, the step of determining further comprising selecting the second identifier corresponding to the social network comprised in connection request.

9. A computer readable medium comprising instructions which, when executed by an access point (260) in a wireless network to carry out the method of claim 1.

## Patentansprüche

1. Von einem Zugangspunkt (260) durchgeführtes Verfahren zum Verbinden eines elektronischen Geräts (200) eines Gastbenutzers mit einem vom Zugangspunkt (260) bereitgestellten drahtlosen Netzwerk, wobei sowohl das elektronische Gerät als auch der Zugangspunkt (260) jeweils einer ersten und zweiten Kennung in einem ein soziales Netzwerk hostenden Server (265) zugeordnet sind, wobei das soziale Netzwerk durch eine Diagrammstruktur definiert ist, die Beziehungen zwischen mehreren Knoten definiert, wobei jeder Knoten einer Kennung im sozialen Netzwerk entspricht, wobei das Verfahren umfasst:
- Empfangen einer Verbindungsanfrage zum Verbinden mit dem Netzwerk, wobei die Verbindungsanfrage die erste Kennung umfasst,
- Bestimmen, unter Verwendung des das soziale Netzwerk hostenden Servers (265), ob ein Abschnitt der Diagrammstruktur eine Beziehung zwischen den jeweils der ersten und zweiten Kennung entsprechenden Knoten definiert, und
- Gewähren von Zugang zum Netzwerk basierend auf dem Bestimmen,
wobei das Verfahren **dadurch gekennzeichnet ist, dass** der Zugangspunkt (260) mehreren zweiten Kennungen zugeordnet ist, wobei jede zweite Kennung an einem betreffenden Server einem anderen sozialen Netzwerk zugeordnet ist, wobei die Verbindungsanfrage ferner die erste Kennung umfasst, die einem sozialen Netzwerk zugeordnet ist, das vom Gastbenutzer unter den verfügbaren sozialen Netzwerken ausgewählt wird, die den mehreren zweiten Kennungen zugeordnet sind, wobei der Schritt des Bestimmens ferner umfasst:
- Auswählen der dem in der Verbindungsanfrage umfassten sozialen Netzwerk entsprechenden zweiten Kennung.

2. Verfahren nach Anspruch 1, wobei ein Trennungsgrad zwischen zwei beliebigen Knoten der Diagrammstruktur eine Mindestanzahl von Sprüngen ist, die erforderlich sind, um die Diagrammstruktur von einem Knoten zum anderen zu durchqueren, wobei der Abschnitt der Diagrammstruktur, der dem Trennungsgrad zwischen den Knoten entspricht, der ersten und zweiten Kennung entspricht.

3. Verfahren nach Anspruch 2, wobei das Gewähren ferner umfasst:
- Gewähren von Zugang, falls der Trennungsgrad niedriger als eine voreingestellte Zahl ist.

4. Verfahren nach Anspruch 1, wobei die Verbindungsanfrage die Authentifizierungsdaten des sozialen Netzwerks für die erste Kennung umfasst, wobei das Bestimmen ferner umfasst:
- Zugreifen auf den das soziale Netzwerk hostenden Server unter Verwendung der Authentifizierungsdaten.

5. Verfahren nach Anspruch 4, wobei die Verbindungsanfrage die zweite Kennung umfasst, wobei das Verfahren ferner eine positive Zugangsgewährung umfasst:
- Abrufen von Verbindungsdaten des drahtlosen Netzwerks, die der zweiten Kennung zugeordnet sind, und
- Verbinden mit dem drahtlosen Netzwerk unter Verwendung der Verbindungsdaten des drahtlosen Netzwerks.

6. Verfahren nach Anspruch 4, wobei die Verbindungsanfrage ferner eine Kennung des drahtlosen Netzwerks umfasst, wobei das Bestimmen ferner umfasst:
- Abrufen der zweiten Kennung unter Verwendung der Kennung des drahtlosen Netzwerks.

7. Zugangspunkt (260) zum Verbinden eines elektronischen Geräts (200) eines Gastbenutzers mit einem vom Zugangspunkt (260) bereitgestellten drahtlosen Netzwerk, wobei sowohl das elektronische Gerät (265) als auch der Zugangspunkt (260) jeweils einer ersten und zweiten Kennung in einem ein soziales Netzwerk hostenden Server zugeordnet sind, wobei das soziale Netzwerk durch eine Diagrammstruktur definiert ist, die Beziehungen zwischen mehreren Knoten definiert, wobei jeder Knoten einer Kennung im sozialen Netzwerk entspricht, wobei der Zugangspunkt eine Steuerschaltung umfasst, die ausgelegt ist zum:
- Empfangen einer Verbindungsanfrage zum Verbinden mit dem Netzwerk, wobei die Verbindungsanfrage die erste Kennung umfasst,
- Bestimmen, unter Verwendung des das soziale Netzwerk hostenden Servers (265), ob ein Abschnitt der Diagrammstruktur eine Beziehung zwischen den jeweils der ersten und zweiten Kennung entsprechenden Knoten definiert, und
- Gewähren von Zugang zum Netzwerk basierend auf dem Bestimmen,
wobei der Zugangspunkt (260) **dadurch gekennzeichnet ist, dass** er mehreren zweiten Kennungen zugeordnet ist, wobei jede zweite Kennung an einem betreffenden Server einem anderen sozialen Netzwerk zugeordnet ist, wobei die Verbindungsanfrage ferner die erste Kennung umfasst, die einem sozialen Netzwerk zugeordnet ist, das vom Gastbenutzer unter den verfügbaren sozialen Netzwerken ausgewählt wird, die den mehreren zweiten Kennungen zugeordnet sind, wobei der Schritt des Bestimmens ferner ein Auswählen der dem in der Verbindungsanfrage umfassten sozialen Netzwerk entsprechenden zweiten Kennung umfasst.

8. Telekommunikationssystem, das umfasst:
einen Zugangspunkt (260), der ein drahtloses Netzwerk aktiviert, und
ein elektronisches Gerät (200) eines Gastbenutzers, um sich mit dem drahtlosen Netzwerk zu verbinden, wobei sowohl das elektronische Gerät (200) als auch der Zugangspunkt (260) jeweils einer ersten und zweiten Kennung in einem ein soziales Netzwerk hostenden Server (265) zugeordnet sind, wobei das soziale Netzwerk durch eine Diagrammstruktur definiert ist, die Beziehungen zwischen mehreren Knoten definiert, wobei jeder Knoten einer Kennung im sozialen Netzwerk entspricht, wobei das elektronische Gerät einen Verbindungsmanager, um Netzwerke zu detektieren und sich mit einem detektierten Netzwerk zu verbinden, sowie eine Steuerschaltung umfasst,
wobei der Zugangspunkt ausgelegt ist zum:
- Empfangen einer Verbindungsanfrage zum Verbinden mit dem drahtlosen Netzwerk, wobei die Verbindungsanfrage die erste Kennung umfasst,
- Bestimmen, unter Verwendung des das soziale Netzwerk hostenden Servers (265), ob ein Abschnitt der Diagrammstruktur eine Beziehung zwischen den jeweils der ersten und zweiten Kennung entsprechenden Knoten definiert, und
- Gewähren von Zugang zum Netzwerk basierend auf dem Bestimmen,
wobei das Telekommunikationssystem **dadurch gekennzeichnet ist, dass** der Zugangspunkt (260) mehreren zweiten Kennungen zugeordnet ist, wobei jede zweite Kennung an einem betreffenden Server einem anderen sozialen Netzwerk zugeordnet ist, wobei die Verbindungsanfrage ferner die erste Kennung umfasst, die einem sozialen Netzwerk zugeordnet ist, das vom Gastbenutzer unter den verfügbaren sozialen Netzwerken ausgewählt wird, die den mehreren zweiten Kennungen zugeordnet sind, wobei der Schritt des Bestimmens ferner ein Auswählen der dem in der Verbindungsanfrage umfassten sozialen Netzwerk entsprechenden zweiten Kennung umfasst.

9. Computerlesbares Medium, das Anweisungen umfasst, die bei deren Ausführung durch einen Zugangspunkt (260) in einem drahtlosen Netzwerk, das Verfahren nach Anspruch 1 ausführen.

## Revendications

1. Procédé mis en oeuvre par un point d'accès (260) pour connecter un dispositif électronique (200) d'un utilisateur invité à un réseau sans fil fourni par le point d'accès (260), aussi bien le dispositif électronique que le point d'accès (260) étant respectivement associés à un premier et à un deuxième identifiant sur un serveur (265) hébergeant un réseau social, le réseau social étant défini par une structure de graphe définissant des relations entre une pluralité de nœuds, chaque nœud correspondant à un identifiant dans le réseau social, le procédé comprenant :
- recevoir une demande de connexion pour se connecter au réseau, la demande de connexion comprenant le premier identifiant,
- déterminer, en utilisant le serveur (265) hébergeant le réseau social, si une partie de la structure de graphe définit une relation entre les nœuds correspondant respectivement aux premier et deuxième identifiants, et
- autoriser l'accès au réseau sur la base de la détermination,
le procédé étant **caractérisé en ce que** le point d'accès (260) est associé à une pluralité de deuxièmes identifiants, chaque deuxième identifiant étant associé sur un serveur respectif à un réseau social différent, la demande de connexion comprenant en outre le premier identifiant associé à un réseau social sélectionné, par l'utilisateur invité, parmi les réseaux sociaux disponibles associés à la pluralité de deuxièmes identifiants, l'étape de détermination comprenant en outre :
- la sélection du deuxième identifiant correspondant au réseau social compris dans la demande de connexion.

2. Procédé selon la revendication 1, dans lequel un degré de séparation entre deux nœuds quelconques de la structure de graphe est un nombre minimum de sauts nécessaires pour traverser la structure de graphe d'un nœud à l'autre, la partie de structure de graphe correspondant au degré de séparations entre les nœuds correspondant aux premier et deuxième identifiants.

3. Procédé selon la revendication 2, dans lequel l'autorisation comprend en outre :
- l'autorisation de l'accès si le degré de séparation est inférieur à un nombre préréglé.

4. Procédé selon la revendication 1, dans lequel la demande de connexion comprend les données d'authentification de réseau social pour le premier identifiant, la détermination comprenant en outre :
- l'accès au serveur hébergeant le réseau social en utilisant les données d'authentification.

5. Procédé selon la revendication 4, dans lequel la demande de connexion comprend le deuxième identifiant, le procédé comprenant en outre suite à une autorisation d'accès positive :
- la récupération de données de connexion de réseau sans fil associées au deuxième identifiant, et
- la connexion au réseau sans fil en utilisant les données de connexion de réseau sans fil.

6. Procédé selon la revendication 4, dans lequel la demande de connexion comprend en outre un identifiant de réseau sans fil, la détermination comprenant en outre :
- la récupération du deuxième identifiant en utilisant l'identifiant de réseau sans fil.

7. Point d'accès (260) pour connecter un dispositif électronique (200) d'un utilisateur invité à un réseau sans fil fourni par ledit point d'accès (260), aussi bien le dispositif électronique (265) que le point d'accès (260) étant respectivement associés à un premier et à un deuxième identifiant sur un serveur hébergeant un réseau social, le réseau social étant défini par une structure de graphe définissant des relations entre une pluralité de nœuds, chaque nœud correspondant à un identifiant dans le réseau social, le point d'accès comprenant un circuit de commande configuré pour :
- recevoir une demande de connexion pour se connecter au réseau, la demande de connexion comprenant le premier identifiant,
- déterminer, en utilisant le serveur (265) hébergeant le réseau social, si une partie de la structure de graphe définit une relation entre les nœuds correspondant respectivement aux premier et deuxième identifiants, et
- autoriser l'accès au réseau sur la base de la détermination,
le point d'accès (260) étant caractérisé en étant associé à une pluralité de deuxièmes identifiants, chaque deuxième identifiant étant associé sur un serveur respectif à un réseau social différent, la demande de connexion comprenant en outre le premier identifiant associé à un réseau social sélectionné, par l'utilisateur invité, parmi les réseaux sociaux disponibles associés à la pluralité de deuxièmes identifiants, l'étape de détermination comprenant en outre la sélection du deuxième identifiant correspondant au réseau social compris dans la demande de connexion.

8. Système de télécommunication, comprenant :
un point d'accès (260) activant un réseau sans fil, et
un dispositif électronique (200) d'un utilisateur invité pour se connecter au réseau sans fil, aussi bien le dispositif électronique (200) que le point d'accès (260) étant respectivement associés à un premier et à un deuxième identifiant sur un serveur (265) hébergeant un réseau social, le réseau social étant défini par une structure de graphe définissant des relations entre une pluralité de nœuds, chaque nœud correspondant à un identifiant dans le réseau social, le dispositif électronique comprenant un gestionnaire de connexion pour détecter des réseaux et pour se connecter à un réseau détecté, et un circuit de commande,
le point d'accès étant configuré pour :
- recevoir une demande de connexion pour se connecter au réseau sans fil, la demande de connexion comprenant le premier identifiant,
- déterminer, en utilisant le serveur (265) hébergeant le réseau social, si une partie de la structure de graphe définit une relation entre les nœuds correspondant respectivement aux premier et deuxième identifiants, et
- autoriser l'accès au réseau sur la base de la détermination,
le système de télécommunication étant **caractérisé en ce que** le point d'accès (260) est associé à une pluralité de deuxièmes identifiants, chaque deuxième identifiant étant associé sur un serveur respectif à un réseau social différent, la demande de connexion comprenant en outre le premier identifiant associé à un réseau social sélectionné, par l'utilisateur invité, parmi les réseaux sociaux disponibles associés à la pluralité de deuxièmes identifiants, l'étape de détermination comprenant en outre la sélection du deuxième identifiant correspondant au réseau social compris dans la demande de connexion.

9. Support lisible par ordinateur, comprenant des instructions qui, lorsqu'elles sont exécutées par un point d'accès (260) dans un réseau sans fil, exécutent le procédé selon la revendication 1.
